# EUROPEAN PATENT APPLICATION

(11) **EP 2 328 135 A1**
(43) Date of publication of application: **01.06.2011**
(21) Application number: 10464003.2
(22) Date of filing: 28.01.2010
(51) Int. Cl.: G09B 7/00, G09B 7/02

(54) **System of testing, analysing and reporting (STAR)**

(30) Priority: 27.11.2009 RO 200900994
(71) Applicant: Singer, Boris, Bucharest 010782 (RO); Singer, Florence-Mihaela, Bucharest 010782 (RO)
(72) Inventor: Singer, Boris, Bucharest 010782 (RO); Singer, Florence-Mihaela, Bucharest 010782 (RO)
(74) Representative: Turcanu, Constantin

(57) **Abstract**

The invention proposes a SYSTEM of TESTING, ANALISING and REPORTING (STAR) based on the following components: the construction of collaborative databases of items in several languages, the assessment of students' knowledge and abilities in various school subjects by using tests from the databases, the communication to every student of a personalized multi-criteria analysis obtained by processing students' answers, and the improvement of student's learning by offering new sets of questions situated in his/her zone of proximal development.

The STAR technology consists in designing questions and tests that are administered to students, followed by the development of a complex computerized analysis of their answers. This analysis is personalized and is delivered confidentially to every student. Relevant data is also prepared and might be delivered to educators (teachers or parents). Based on this analysis, the STAR technology is capable to offer every student an educational program which is adequate to his/her level of competence, interests and preferences.

The tests are provided either in printed booklets or in an electronic version. The students' options are recorded on a specially prepared answer sheet which is available in print or in an electronic version. For the printed version, the answer sheets are processed by high speed scanners.

The STAR technology supposes:
- An electronic system of recording the questions and their features based on a standardized form, which allows organising databases of items and tests for several school subjects
- A complex testing system that allows identifying and recording a variety of parameters of learning for potentially each school subject
- A methodology for the analysis of students' answers based on a variety of criteria that allow personalized feedback and a learning oriented system of testing students
- The construction of interactive databases for clusters of target population, respectively: students, teachers, schools (or groups of students), which allow statistical analysis
- Operational searching mechanisms in the data bases that allow selecting relevant information for delivering items/ tests that support students' effective learning.

## Description

The invention refers to a SYSTEM of TESTING, ANALYSING and REPORTING (STAR), which is addressed to students, teachers, and parents. The invention develops a tool that allows the educators, for the first time, to truly understand the level of attainment of each student in the sub-domains of each school discipline, within the context of the results obtained by other students of the same cohort. The invention is based on the experience accumulated by the authors in the administration and the analysis of large samples of students' answers to tests.

The invention will create the premises of moving forward from "education for all" to "education for every individual" not by rigid curricula and standard tests but by offering to every student an educational program that is adequate to his/her capacities, strengths and weaknesses. On the basis of this invention it is possible to design studies for assessing the competences development in students, which might lead, in the future, to interventions and corrections at the decision making level in education.

In order to achieve these purposes, the invention proposes a complex system that analyzes the students' answers to a variety of tests and provides personalized feedback to every student regarding the level of his/her performances and the limits of personal knowledge and understanding. The proposed tool allows identifying the zone of proximal development of the student for a domain of knowledge and records the variation in performance at successive tests.

STAR uses Internet in order to ensure a consistent feedback without direct human intervention. Teachers can use the information provided by the proposed technology for correlating the teaching techniques with the students' needs, while parents or caregivers can check and monitor children's performance in learning. Through personalized messages, students' motivation is increased and they are stimulated to improve their level of learning acquisitions.

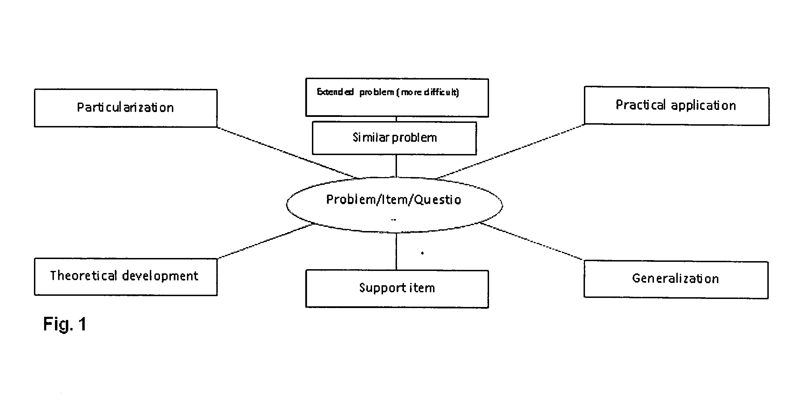

STAR supposes, according to the invention:
● The design of *commented items.* Each commented item contains:
   questions, answers, distracters that are focused on students' possible mistakes, comments addressed to students concerning these possible mistakes, indications for solving, complete solutions, and explanations that extend the item (item = constitutive element of a test or questionnaire) to further connections with other related items.
● The development of a web database containing questions/ items/ problems and connections in between. The web database develops as follows:
   - An invitation to devise items for tests is addressed to teachers, students, other categories of interest. Proposals are made via Internet.
   - In order to register, an author has to provide some identification data, such as: name, E-mail, phone, work place, occupation, mailing address. The system delivers a user name and a password through which an author can access a specific form to record a proposed item.
   - The access to the database depends on the assigned roles: proposer, evaluator, editor, and administrator. The authors/ proposers of items can have the status of: novice, advanced, and expert. Their possibility of intervention in the database depends on their status.
   - Each proposal is checked in a peer review system by evaluators assigned to a specific problem by an editor. The editors eventually correct the item and/or add supplementary information connected to it. After acceptance as valid, the item is added in the database of items.
● The STAR technology organises the questions/ problems in a network structure, as shown in figure 1. Each item in the database is connected with: a similar one, a more general one, a more particular one, an extended item, a support item that helps in solving, a practical or a theoretical development of the item (if applicable). This network structure helps delivering to every pupil new questions/problems that are related to the ones already done. If a student gave a correct answer to a question, he/she gets a more difficult/more abstract item correlated to the previous one; if the answer is wrong, the mistake is analysed and the student gets a simpler problem from the same area. Thus, in principle, the technology detects the area of competence of a student and the new delivered items or tests train the limits of this area (the range between the lower and the upper attractor) in order to increase knowledge and understanding by starting from what the student know and know how.
● The identification of certain criteria relevant for the analysis of the items in relation with students' answers. These criteria refer to: discipline (e.g. Mathematics, Informatics, etc.); domain (e.g. Algebra, Geometry, Logic, etc.), level of difficulty, length of the text, the use of icons/ figures/ images, the solving methods, other criteria that are specific to each subject matter, or even to an item. The system allows adding new criteria as far as the databases are developed. This flexibility within the criteria allows better detecting students' level of knowledge and understanding.
● The construction of a test framework that is balanced according to a list of criteria and contains a number of 10-20 items in addition compared to the number of items that are assessed. Within this framework, the student may take some decisions of selecting the items to answer, and thus he/she arrives at a personalized test. In this way, the technology allows every student to manifest preferences and thus to create and solve his/her own test. This possibility refers to three components:
   o Choosing the items to answer from a list that contains more items than the maximal requested number for the best score. For example, the students is presented with a test of 40 items from which he/she is supposed to chose and solve at most 30, according to the regulations of a specific contest.
   o Choosing among a list of items from two subject matters. A double list of items grouped in pairs from two subject matters (for example:
      French - Spanish, English - German, Mathematics - Informatics, Mathematics - Science, Geography - History) is presented; the student is supposed to chose and solve only one item from each pair.
   o Assuming a risk level. The system allows the student choosing the risk level he/she assumes by indicating the questions on which he/she is sure about the chosen answer. There is a different score per item if marking "sure" is accompanied by a correct answer or by a wrong one, or if the answer is missing. Thus, knowing and applying the contest rules, the student has the possibility to build a working strategy in order to get the highest score.
● Developing a large range of different messages that address students' cognitive abilities. These messages are obtained by combining comments and criteria associated to each item with statistical analysis.
● Organising interactive databases. These databases are specifically referred to: commented and classified items, tested students, students' answers, schools and teachers involved in the assessment program. The invention develops an information system that connects these databases in such a way that each student is identified within a school and receives personalized feedback concerning his/her own problem solving capacities compared to thousands of students with the same school age.

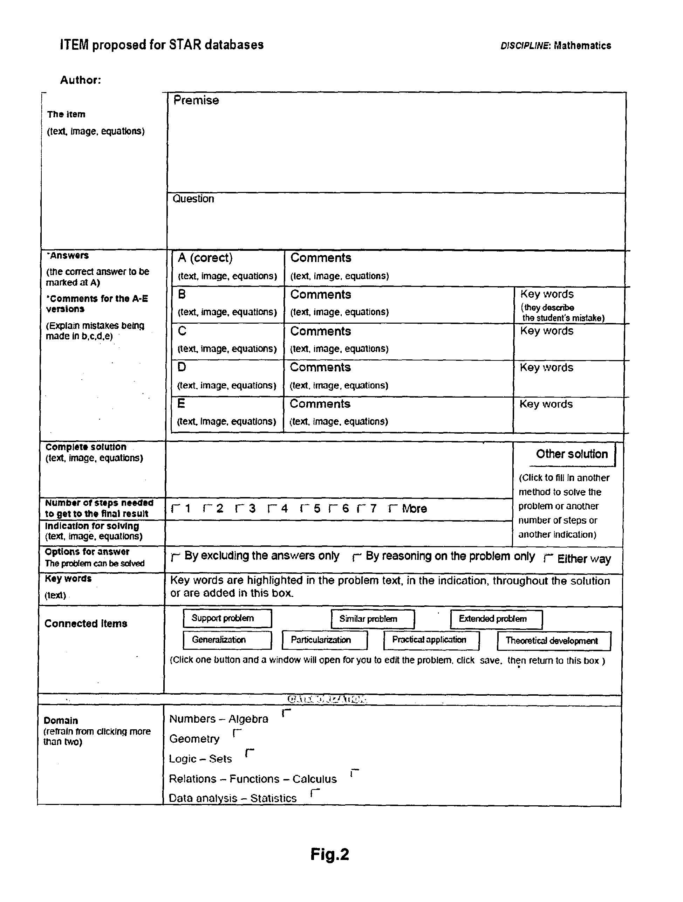

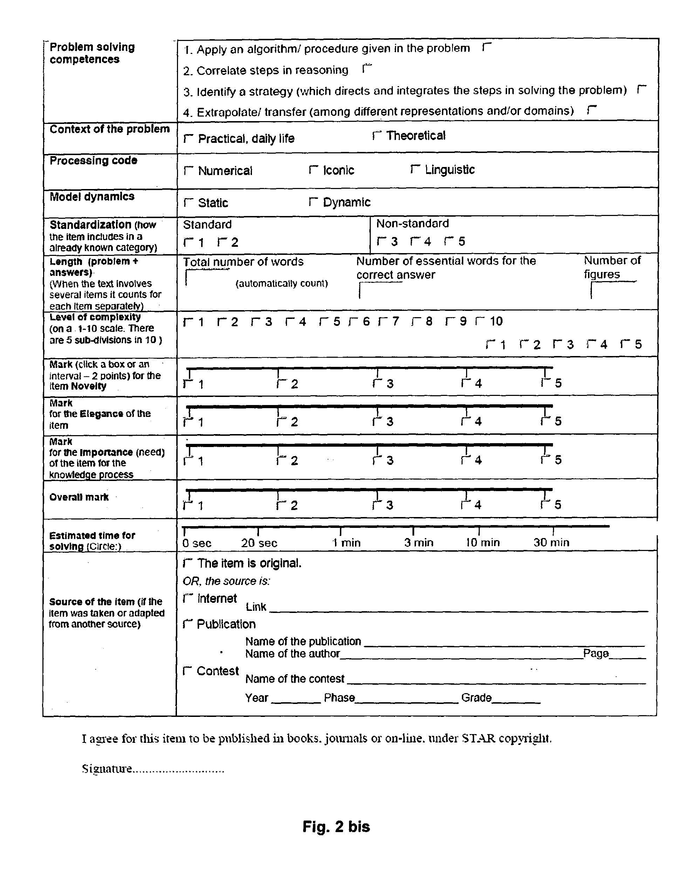

A tested student fills in an answer sheet (see Fig. 2), on which he/she writes some identification personal data and a password in order to access electronically the analysis of his/her results. The recording and the checking of the tests outcomes are made through high speed scanning of the answer sheets. The test can be also solved via Internet.

The STAR technology analyzes the items the student has chosen to answer and the chosen option for each item. Further, each student can receive personalized feedback concerning his/her answers to the test via Internet. The feedback contains all the information gathered by STAR about the student's abilities and knowledge, as well as solving indications, and various explanations concerning the content of each item.

The correlated analysis made for more contests in more disciplines, along several years, can give a more accurate view of the student's cognitive profile and more appropriate ways to help him/her to progress in learning. Based on the recorded analysis of one or more previous tests, the student can receive lists of items that are situated in his/her zone of proximal development in a certain domain, which allows him/her improving specific competences, such as, for example, problem solving or reading comprehension.

The system also delivers upon request sets of data that concerns the teacher who organizes the contest in a school. The teacher can access these data by using a personal password.

Beyond personal qualitative data, the STAR system offers statistical analysis. A student can see his/her position in relation to other students concerning a global score, but also concerning various criteria. To be more relevant, this information is given in the shape of coloured diagrams. A coloured diagram is a suggestive representation of a student's abilities in a specific domain. The procedure of generating individualized diagrams is the following:
■ Each problem is evaluated by a teacher/ researcher/ editor concerning its level of complexity based on curricular distribution and statistical predictions. The complexity scale of a problem is associated with colours based on the following rule: *white* is for 100% of the target school population that is able to solve a problem, yellow for one third of the population of the previous category, *orange* for one third of the population of the previous category, and so on for the following colours: *red, green, blue, violet, brown,* and *black* (which has 5 levels more: *Black 1, Black 2, ..., Black 5).*
■ These first evaluations are exposed to empirical research; for example, when the problem is given in a competition, or in a test, or is individually approached, its initial "score" is pondered statistically and the system memorizes its new score.
■ The students' outcomes are synthetically visualized using a coloured diagram, which has the shape of a spectrum of colours depending on the percent of correctly solved problems from a given set of problems. Each colour has a specific meaning and the spectrum of the diagram reflects the student's abilities in the tested domain. A coloured diagram can be printed on binds, medals, etc. This system motivates the participants to progress to the next level by solving new tests that are adequate to their own level and are delivered upon request.

Within the current assessment procedures in the educational system, tests results analysis is based on the direct work of teachers, which has the following disadvantages:
■ It is time and resource consuming
■ It is subjective and allows errors
■ It is not able to provide a complex personalized analysis of students' competences in order to effectively help the student's advancement in learning
■ It cannot take into consideration statistical data and the comparison of the learning outcomes of each student with those of other thousands of students from the same age cohort.

STAR eliminates these inconveniences and shows the following advantages:
● Assesses competences of a large number of students and gives them complex feedback, all in a short period of time.
● Processes a large amount of data with a few resources and produces a large amount of structured information.
● Provides a complex analysis with a lot of interfering factors, (which cannot be achieved by only direct human intervention) by taking into consideration and electronically processing all the gathered data, from the analysis of each item to various statistics concerning the results of thousands of students involved in the assessment.
● Generates very many personalized messages, addressed to the target population of students, teachers, parents through the use of information technology.
● Produces reliable assessment, equal for all the participants, which does not contain human errors (inherent when teachers evaluate hundreds of tests manually).
● Offers effective access to the zone of proximal cognitive development of a student in a specific domain.
● Offers respondents the possibility to personalize the test by choosing the items from big databases of items developed for various domains.
● Develops a mechanism for increasing students' motivation for self understanding, participation, awareness of their level of knowledge and competence, decision making, risk taking, and progress in learning.
● Ensures confidentiality of the data because each student can access his/her tests results and comments only based on a personal password.
● Ensures a clear recording of all settlements, schools, and students involved in the assessment process.
● Allows identifying the level of students' competencies in a certain domain at a local, national, or more global context.
● Offers educators a useful tool in assessing and monitoring the competences development of each student.
● Offers databases and a tool for further empirical research in education, which might highlight possible correlations among students' competences; moreover, these can provide valuable resources for adequate training.
● Offers information that might lead, in the future, to quality interventions of decision makers in the educational system.

Examples of applying the invention are given in the following, based on the figures, which represent:
- Fig. 1: A representation for the network structure of the items;
- Fig. 2: Item record form for Mathematics;
- Fig. 2 bis: Item record form for Mathematics;

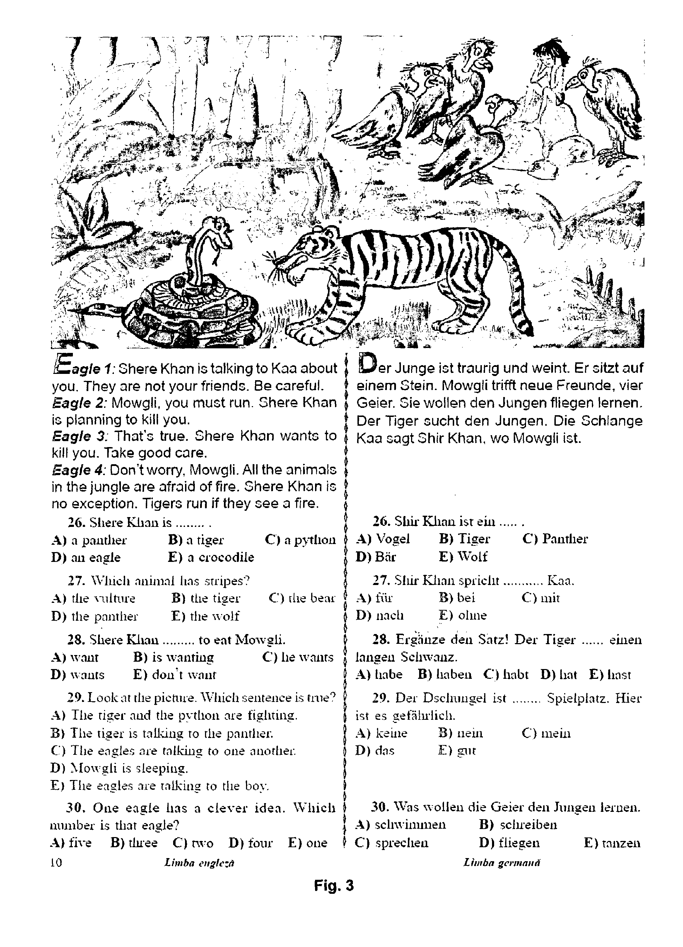

- Fig. 3: Excerpt from a test applied for two foreign languages (English-German);

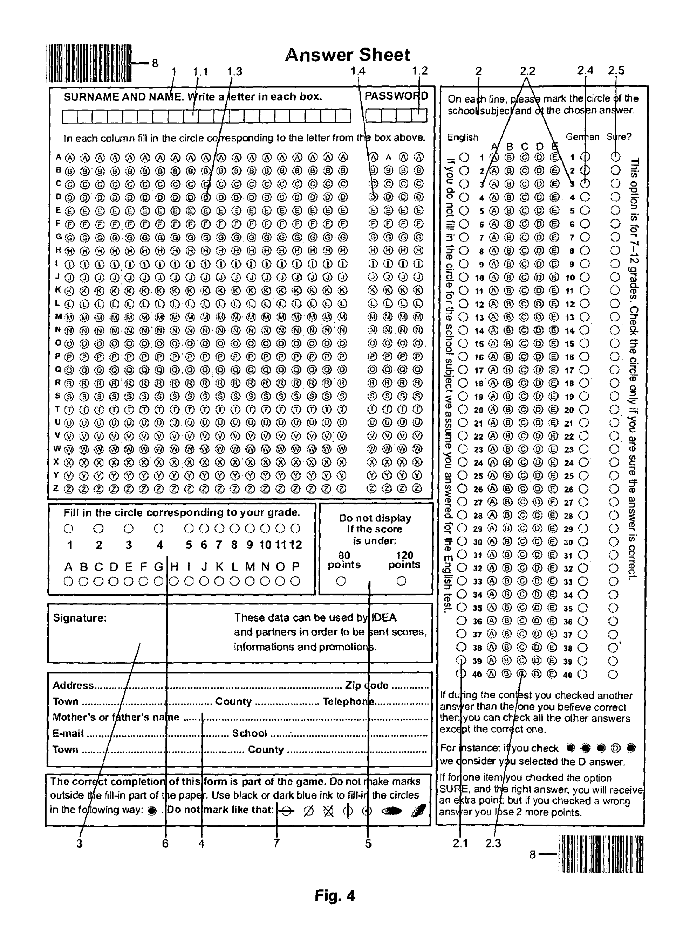

- Fig. 4: Answer-sheet for testing knowledge and understanding in foreign languages (English-German);

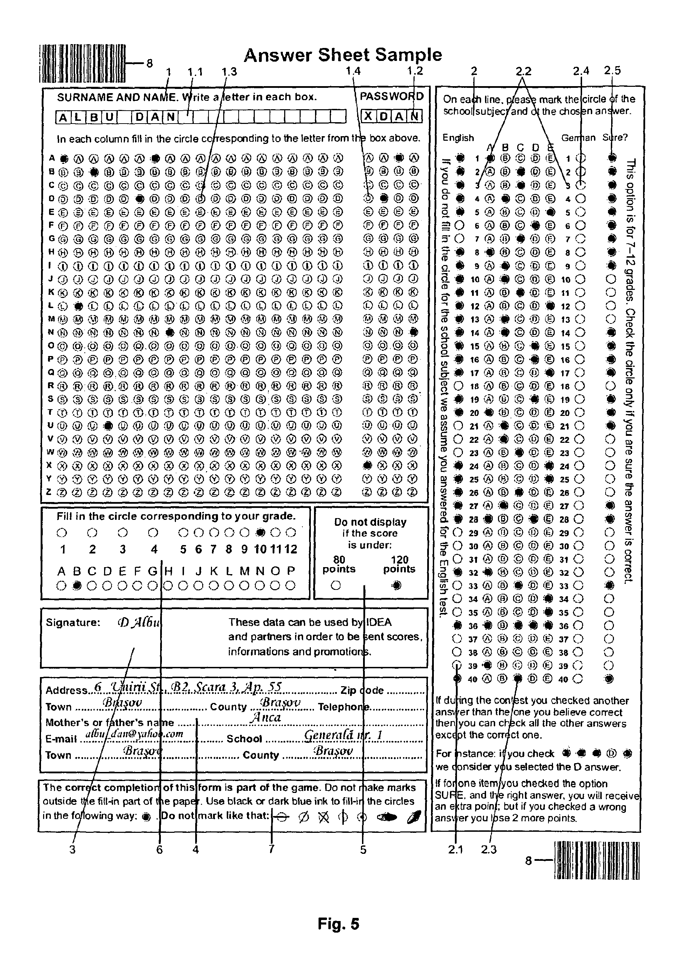

- Fig. 5: Answer-sheet sample for testing knowledge and understanding in foreign languages (English-German).

The scheme in figure 1 represents the network structure of the questions/ problems in the database. Each item in the database is connected with: a similar one, a more general one, a more particular one, an extended item, a support item that helps in solving, a practical or a theoretical development of the item (if applicable). This network structure helps delivering to every pupil new questions/problems that are related to the ones already done.

According to the invention, the items are proposed by authors using standardised forms as the ones presented in figures 2 and 2bis, for mathematics.

The form is filled in by an author, or successively, by the author, an assessor, and an editor. The fields of the form are not numbered because they are clearly nominated within the figures, and contain the following boxes:
- a box for the text of the item (containing text, image, equations if the case);
- boxes for the multiple answers to the question addressed by the item (the correct answer is to be marked at A). For each answer the author has to fill in Comments. These comments should explain the mistakes being made when someone chooses B,C,D,E. Some key words related to the mistake should also be provided.
- a field for the complete solution of the problem. The electronic version allows more solutions (given as text, image, and equations) for a problem.
- a field for the number of steps needed to get to the final result;
- a field for an indication for solving the problem;
- a field that that allows the options for the strategy of getting an answer, which indicates if the problem can be solved: only by excluding the given answers, only by reasoning on the problem, or either way.
- a box for the keywords. The keywords (text) can be highlighted in the problem text, in the indication, throughout the solution or are added in the specific box.
- blue boxes that refer to the Connected items to the one recorded by the form. The possible connected items are: a *support problem, a similar problem,* an *extended problem, a generalization, a particularization, a practical application, a theoretical development.* The author gets the instruction: Click one button and a window will open for you to edit the problem, click save, and then return to this box.

The second page contains a series of categories in which the item is included. The author or an editor has to thick the box for each adequate category. These categories are, in the case of the mathematics form:
■ Domain (Numbers-Algebra, Geometry, Logic-Sets, Relations-Functions-Calculus, Data processing-Statistics)
■ Problem solving competences (1. Apply an algorithm/ procedure given in the problem, 2. Correlate steps in reasoning, 3. Identify a strategy (which directs and integrates the steps in solving the problem), 4. Extrapolate/ transfer (among different representations and/or domains))
■ The context of the problem (practical, daily life; theoretical)
■ The processing code (numerical, iconic, linguistic)
■ The model dynamics (static, dynamic)
■ Standardization (how the item includes in a already known category ― standard, non standard)
■ Length (problem + answers) referring to: Total number of words; Number of essential words for the correct answer; Number of figures.
■ The level of complexity (on a 1-10 scale. There are 5 sub-divisions in 10).
■ The next fields regard various marks accorded by reviewers (for novelty, elegance, the importance (need) of the item in the knowledge process, and an overall mark).
■ Other data to be filled in by the author refer to the estimated time for solving.
■ The last boxes are for mentioning if the item is original and, in the case it is not, for the Source of the item (if the item was taken or adapted from another source). The sources are Internet (link), publications (name of the publication, name of the author) or contests (name of the contest, year, phase, grade).
■ The form ends with the consent of the author for the publishing of the item, followed by his/her signature.

In a mathematics contest the students receive 40 problems from which they are supposed to solve at most 30 (only the first marked 30 are assessed). The first ten items are scored with 3 points, the next ten with 4 points, the items from 21 to 30 with 5 points and the last ten (from 31 to 40) with 4 points again. Students might chose to answer to at most 30 items depending on their preferences and the score they expect to obtain (the items with higher scores are more difficult). There is a penalty valuing 1/4 from the value of each item for any wrong answer. The students can also use the "sure" option for each item, knowing that they can win 1 point if the answer is correct or that they risk losing 2 points if the answer is wrong.

In the competition concerning Literature in maternal language, the students receive a literature text (a story) which is accompanied by images. The questions involve reading comprehension, image understanding, understanding of the historical, geographic, social context in which the story takes place, as well as the style and other specific aspects of the text. There are in total 50 questions, from which the student is supposed to answer at most 40. The regulations concerning the scores distribution are similar to the ones in mathematics. The students' interest in participating in this competition is motivated by the attractive text, interesting questions, competition spirit. Moreover, the student is stimulated by the personalized analysis to find out more about him/ herself.

In a foreign languages contest, the items are organized in pairs on two columns for two different languages, for example English-German or French-Spanish. A student is supposed to chose each time one question from each pair of items. The students who know both languages are in advantage.
The Figure 3 represents an excerpt from a test applied for two foreign languages, in the presented case, English-German.

According to the invention, a student records his/her answer on an answer-sheet (Figure 4). The student also fills in on this answer-sheet identification data and a password in order to access electronically the analysis of his/her results. The answer-sheets are processed by high speed scanners. A test can be also solved directly on the Internet.

STAR analyzes the items the student has chosen and the answers to each item. Every student can get via Internet a personalized feedback concerning the given answers, which contains all the information gathered by STAR about the student's knowledge, as well as adequate support for further learning.

Figure 4 contains an example for English-German language test. Such form is used for other subjects as well - the sheet is standardized. In order to gather as much information as possible in one page, the answer-sheet has the surface divided in rectangles as follows:
● a rectangle 1 destined to the registration of the student's name. Rectangle 1 contains: boxes 1.1, for mentioning the student's name containing family name, one letter in each small box, followed by an empty box and then first name, written in the same way, boxes 1.2, for the password, composed of four letters, chosen by the respondent, for the electronic registration, there are columns 1.3 of letters, from A to Z, for recording the name, and four columns 1.4 of letters, from A to Z, for recording the password.
● a rectangle 2 for recording the answers. In rectangle 2 there are the columns 2.1 and 2.4, in which the disciplines for testing are mentioned, for example English Language and German Language. In rectangle 2 there are also two identical columns 2.2, which contain the numbering of the questions the student has to answer to, in this case, 40 questions,. There are also five columns 2.3 (A,B,C,D,E), each column for one answer, and a column 2.5, where the student ticks if he/she is sure about the answer. For each question, corresponding to the numbers from 1 to 40, the student chooses one item he/she wants to answer and ticks either column 2.1 or column 2.4., the considered correct answer is ticked in one of the columns 2.3 (A,B,C,D,E) corresponding to only one item; box 2.5 is ticked only if the student is sure about his/her answer containing explanations about how to fill in the answer sheet.
● a rectangle 3 for recording student's accept on using personal data for analysis and statistical purposes,
● a rectangle 4 for registering address and some identification data,
● a rectangle 5 for the address of the school where the student studies,
● a rectangle 6 for the key stage and class to which the test is provide;
● a rectangle 7 where some instructions for filling in the form are provided,
● a rectangle 8 containing a bar code which identifies the contest for which the sheet is destined.

For a better understanding of the invention, in Figure 5 there is an answer sheet on which the fields are filled in for two school disciplines, English and German languages.

Teams of teachers and researchers prepare, for each of the two subjects taken as example, according to the form in figure 1, respectively figure 2, 40 questions, for which they develop 5 multiple answers out of which only one is correct, distributed in the columns A, B, C, D, and E.

In the same time, specialized teams prepare answers and adequate comments for the distracters for all the questions and all the multiple answers A, B, C, D and E, respectively 200 different comments, for each subject, in total 400, which will be transformed in 400 messages per test for the students, messages that are introduced in the informational system of STAR, in accordance with the invention. The students will answer, according to their knowledge and abilities, filling in the answer sheets (similar to the ones given as examples).

In addition to the comments regarding the items, statistical analysis correlates individual results with those of various sample populations. The evaluation of the results is made efficiently because of the IT facilities (a scanner processes about 40 sheets/ minute). Each student receives a personalized message when accessing the website based on the password written on the answer sheet.

## Claims

1. System of testing, analysing and reporting (STAR) based on the development of collaborative databases of items, design and implementation of tests, computerized analysis of students' answers, individual communication of a personalized feedback, and mediated learning support in the zone of proximal development within a domain, according to the invention. The items can be submitted to the system by any registered user; then they are processed by experts, validated by editors, and finally, recorded in a database. The computerized analysis measures the level of competences development of a student in relation to large samples of students, for various school subjects. The feedback consists in delivering personalized messages to every student via Internet, using the complex databases developed for the analysis of the students' tests. The multi-criteria search engine offers the possibility to access new questions and tests that support further learning.

2. System of testing, analysing and reporting (STAR), in accordance with claim 1, **characterized by** the fact that for the development of collaborative databases of items, design and implementation of tests, computerized analysis of students' answers, individual communication of a personalized feedback, and mediated learning support in the zone of proximal development within a domain, it designs and uses *commented items* composed of: questions, answers, distracters that are focused on students' possible mistakes, comments addressed to students concerning the typical mistakes that are hidden in the distracters, indications for solving, complete solutions. The items are framed in categories that are relevant for various thinking habits and knowledge, for instance the items are classified upon the domain, or competences, or level of difficulty, and a lot of other criteria that are domain specific. This categorization, together with the comments for each distracter and the variability induced by student's decisions concerning what items to chose, allows delivering a list of personalized messages adequate for every student, which identify the differences among the pupils. Using the created databases, the STAR technology identifies the items the student answered, and the chosen response to a question, and delivers the comment that is attached to that distracter. In addition, the student can access items that are related in various ways to the initial one (a particular case, a more general one, a similar problem, an easier one, a more difficult one, etc.), as well as new tests that address the student's weaknesses and/or strengths in learning. The system of recording items is based on a standardised form (see Table 1) that is electronically processed in order to record the items in a structured database.

3. System of testing, analysing and reporting (STAR) based on the development of collaborative databases of items, design and implementation of tests, computerized analysis of students' answers, individual communication of a personalized feedback, and mediated learning support in the zone of proximal development within a domain, in accordance with claim 1, wherein the database of items is developed collaboratively by volunteers around the world. The questions proposed by any user are added into the database after they are checked and classified by experts certified within the system.

4. System of testing, analysing and reporting (STAR) based on the development of collaborative databases of items, design and implementation of tests, computerized analysis of students' answers, individual communication of a personalized feedback, and mediated learning support in the zone of proximal development within a domain, in accordance with claim 1, in accordance with claim 1, wherein the analysis of the items is made according to general criteria (for example, degree of difficulty, key stage, recommended time of solving), criteria that are discipline specific (for example, specific competences in problem solving), and criteria that are item specific. The system allows adding new criteria as far as the databases are developed. This flexibility within the criteria allows better detecting students' level of knowledge and understanding.

5. System of testing, analysing and reporting (STAR) based on the development of collaborative databases of items, design and implementation of tests, computerized analysis of students' answers, individual communication of a personalized feedback, and mediated learning support in the zone of proximal development within a domain, in accordance with claim 1, **characterized by** the use of standardized answer sheets on which the student fills in, besides the chosen answers, some identification data, a password (that allows the personalized communication concerning learning achievements towards the student or the educator via Internet), and some other options (see fig. 3 and 4). For the online version, similar to the printed version, student's answers are recorded in a matrix. Both online data and scanned data are further put in the same format.

6. System of testing, analysing and reporting (STAR) based on the development of collaborative databases of items, design and implementation of tests, computerized analysis of students' answers, individual communication of a personalized feedback, and mediated learning support in the zone of proximal development within a domain, **characterized by** the possibility of the student to choose the risk level through selecting the questions on which the pupil is sure about the chosen answer. There is a different score if marking "sure" is accompanied by a correct answer or by a wrong one to that item, or it is missing.

7. System of testing, analysing and reporting (STAR) based on the development of collaborative databases of items, design and implementation of tests, computerized analysis of students' answers, individual communication of a personalized feedback, and mediated learning support in the zone of proximal development within a domain, according to the claim 1, which is **characterized by** the choice of items from a larger list of items, within one or more school subjects. The system can use standardized answer-sheets for one or two school subjects, for example, English and German languages, Mathematics and Informatics, Mathematics and Science. Starting from a larger list of items and using the option "sure", the student has the possibility to build a working strategy in order to get the highest score.

8. System of testing, analysing and reporting (STAR) based on the development of collaborative databases of items, design and implementation of tests, computerized analysis of students' answers, individual communication of a personalized feedback, and mediated learning support in the zone of proximal development within a domain, in accordance with claim 1, wherein any student can see his/her position in relation to other students concerning a global score, and also concerning various criteria. This information is given in a shape of coloured diagrams, which are a suggestive representation of student's competences in a specific domain/discipline compared with the similar competences of other students from the same cohort. Every problem is assessed by an expert and receives a specific colour depending on domain and complexity. A coloured diagram generated for a student has the shape of a spectrum of colours depending on the percent of the problems solved correctly from a given set of problems. Each used colour (white, yellow, orange, red, green, blue, violet, brown, and black) has a specific meaning and the spectrum of the diagram reflects the student's abilities in the tested domain compared to a tested target population.

9. System of testing, analysing and reporting (STAR) based on the development of collaborative databases of items, design and implementation of tests, computerized analysis of students' answers, individual communication of a personalized feedback, and mediated learning support in the zone of proximal development within a domain, in accordance with claim 1, wherein new tests that satisfy certain criteria in order to support students' further learning are generated. The system detects the student's level of competence and can deliver new tests containing items situated in the zone of proximal development of the student within a domain/discipline. The delivery is made upon the request of a user (student, teacher), who can specify various criteria/keywords for the search of items in the databases. The development of the new tests is based on the complex analysis of students' answers to previous tests.
